# EUROPEAN PATENT SPECIFICATION

(11) **EP 3 899 336 B1**
(45) Date of publication and mention of the grant of the patent: **06.08.2025**
(21) Application number: 19839109.6
(22) Date of filing: 09.12.2019
(51) Int. Cl.: F16K 3/26, F16K 43/00

(54) **PLUMBING FITTING**
LEITUNGSARMATUR
RACCORD DE PLOMBERIE

(30) Priority: 19.12.2018 GB 201820706
(43) Date of publication of application: 27.10.2021
(73) Proprietor: Aalberts Integrated Piping Systems Limited, Doncaster South Yorkshire DN4 8DF (GB)
(72) Inventor: WHITE, Samuel, Nottinghamshire S81 9DP (GB)
(74) Representative: Wilson Gunn
(86) International application number: PCT/GB2019/053462
(87) International publication number: WO 2020/128427

(56) References cited:
- FR-A- 1 233 159
- FR-A5- 2 041 861
- JP-U- S5 234 422

## Description

### Technical Field of the Invention

The present invention relates to a plumbing fitting, and to a plumbing system comprising the plumbing fitting. In particular, but not exclusively, the present invention relates to a plumbing fitting for use in a domestic plumbing system.

### Background to the Invention

A plumbing system is one that conveys fluid to, through and from buildings using pipes, fixtures and other components.

Plumbing fittings are used in a plumbing system to perform various functions. An example of a known plumbing fitting is a pressure independent control valve (PICV), which has a mechanism adapted to regulate and control fluid flow and pressure, and to control pressure differential across the valve. Most plumbing systems include a variety of plumbing fittings, each configured for a specific function.

The reader is directed to FR 1233159 A which describes a liquified gas cylinder valve and FR 2041861 A5 which describes a faucet control piston with a helical ramp. A plumbing fitting according to the preamble of claim 1 is known from JP S52 34422 U.

It is an object of the present invention to provide a plumbing fitting having improvements over those of the prior art.

### Summary of the Invention

According to a first aspect of the present invention, there is provided a plumbing fitting comprising: an outer body having a flow path extending therethrough; an inner body disposed in, and axially movable along an axis relative to, the outer body; sealing means configured to prevent leakage of fluid from the plumbing fitting; the outer body or the inner body further comprising a track, the other of the outer body or the inner body further comprising a projection, the projection being movable in the track; wherein the track has at least a primary, outer, portion, a secondary, central, portion and a tertiary, outer, portion, and the angle of inclination of the secondary, central, portion is greater than the angle of inclination of the primary, outer, portion and of the tertiary, outer, portion, respectively, the angle of inclination being relative to the axis of axial movement; and wherein the plumbing fitting is movable between a first sealing configuration in which the projection is arranged in the primary, outer, portion, and a second sealing configuration in which the projection is arranged in the tertiary, outer, portion; wherein the inner body comprises an inlet aperture and an outlet aperture, wherein the or each track is substantially shaped as a sigmoid curve, where the respective ends of the curve are inclined with respect to said axis of the axial movement.

The sealing means, which is configured to prevent inadvertent leakage of fluid from the fitting, can be provided between the inner body and the outer body. As a result, the sealing means provides a resistive force against movement of the inner body relative to the outer body, e.g. movement between the different configurations. The resistive force is particularly noticeable when the fitting has not been reconfigured for an extended period of time, which can result in the fitting becoming stuck in place, e.g. by swelling, hardening or degradation of the sealing means. Embodiments of the present invention address this problem by the provision of, *at least,* a mechanically advantageous track and projection arrangement, which can help to overcome the resistive force of the sealing means. The track and projection arrangement makes it is easier for a user to move, in a gradual and controlled manner, the inner body relative to the outer body, against the resistive force of the sealing means. In this way, a user can reconfigure the fitting with a reduced risk of damaging the fitting and of injuring themselves, e.g. by breaking the fitting by applying excessive and uncontrolled force thereto. Moreover, the steeper central portion enables the inner body to be moved axially by a suitable distance (greater than by movement via the less steep primary and tertiary portions), whilst the inner body is already in motion, when the inner body is between the sealing configurations and is not working to compress the seals, so can be more easily moved. As such embodiments of the present plumbing fitting are practical, convenient, straightforward to use and can be used in various configurations.

The inner body is disposed in, and movable along an axis relative to, the outer body. This axis is referred to herein as 'the axis of axial movement'. The axis of axial movement may also be an axis of rotation, about which the inner body may be rotated to effect axial movement between the first sealing configuration and second sealing configuration, as a result of the guiding of the inner body relative to the outer body caused by the interaction between the projection and the track.

The outer body or the inner body may comprise one or more tracks. The outer body or the inner body may comprise at least two, three or four tracks. The outer body or the inner body may comprise two tracks. The other of the outer body or the inner body may comprise one or more projections. The other of the outer body or the inner body may comprise at least two, three or four projections. The other of the outer body or the inner body may comprise two projections. The or each projection may correspond with a respective track.

In some embodiments the inner body may comprise the or each track, and the outer body may comprise the or each projection.

In alternative embodiments the outer body may comprise the or each track, and the inner body may comprise the or each projection.

The or each projection may comprise any suitable material. The or each track may comprise any suitable material. Suitable materials will be known to a person skilled in the art.

The or each projection may be provided by a screw, such as a grub screw. The or each projection may be in the form of a ball-bearing tipped screw, such as a grub screw with a ball bearing tip as the projection.

The or each track may be substantially S-shaped. According to the invention the or each track is substantially shaped as a sigmoid curve. The or each track may be substantially shaped as a logistic curve.

The or each track has at least a primary, outer, portion, a secondary, central, portion and a tertiary, outer, portion. That is to say, the track may comprise other portions, e.g. in between and/or at the end of the primary, outer, portion, and/or the secondary, central, portion and/or the tertiary, outer, portion.

In some embodiments, the or each track may consist of the primary, outer, portion, the secondary, central, portion and the tertiary, outer, portion.

The or each track may comprise one or more notches into which a projection is releasably engageable to thereby secure in position the inner body relative to the outer body. The or each notch may be provided towards or at one or both respective end points of one or more or each track. This is especially preferable where the projection is provided by a screw, because the screw can be screwed into the notch to secure the inner body relative to the outer body, and unscrewed to allow movement of the screw in the track and thus movement of the inner body relative to the outer body.

One or more of the or each primary, outer, portion; secondary, central, portion; and tertiary, outer, portion may be straight. One or more of the or each primary, outer, portion; secondary, central, portion; and tertiary, outer, portion may be curved.

The change in inclination of the or each track on moving between the primary, outer, portion, and/or the secondary, central, portion, and/or the tertiary, outer, portion may be gradual.

The change in inclination of the or each track on moving between the primary, outer, portion, and/or the secondary, central, portion, and/or the tertiary, outer, portion may be abrupt.

The outer body may be a manifold. The outer body may comprise two or more connectors, each having a bore therethrough. Each connector may be adapted to connect to a pipe of a plumbing system. Each connector may be disposed on an outside of the outer body. There may be an inlet connector having an inlet bore. There may be an outlet connector having an outlet bore.

The outer body may comprise a cavity in which the inner body is disposed. The outer body may comprise a closed base. The cavity may be accessible through an opening provided on the outer body. The outer body may comprise at one end an opening to the cavity, and at the opposite end the closed base.

The flow path may extend between the inlet bore and the outlet bore. The flow path may be adapted to convey a liquid through the plumbing fitting. The flow path may be adapted to convey a liquid at non-ambient or elevated pressures.

The inner body may be movable between the first sealing configuration and the second sealing configuration manually, mechanically and/or electronically.

The inner body may be adapted to releasably receive a mechanism. The inner body may comprise a cavity adapted to releasably receive the mechanism. The inner body may comprise a closed base. The inner body may comprise at one end an opening to the cavity, and at the opposite end the closed base. For example, the inner body cavity may comprise a screw thread. The screw thread may correspond to a screw thread on the mechanism.

The inner body may be a receptacle. The inner body may be a housing arranged to releasably house the mechanism. The housing may be arranged to releasably enclose a proportion of the mechanism within it. The housing may be arranged to releasably enclose at least 40%, 50%, 60%, 70%, 80%, 90% or 95% of the volume of the mechanism within it.

In some embodiments the inner body and the mechanism may be formed of separate units.

In some embodiments the inner body may form the mechanism.

According to the invention the inner body comprises two or more apertures.

In the first sealing configuration the inlet aperture may align with the inlet bore. In the first sealing configuration the outlet aperture may align with the outlet bore.

In use, in the first sealing configuration fluid may flow into the inlet bore in the inlet connector, then through the inlet aperture and the mechanism, then through the outlet aperture, then through the outlet bore in the outlet connector.

In the second sealing configuration the inlet aperture may be displaced from the inlet bore. In the second sealing configuration the inlet aperture may be rotationally displaced from the inlet bore, e.g. about the axis of axial movement. In the second sealing configuration the inlet aperture may be translationally displaced from the inlet bore, e.g. along the axis of axial movement.

In the second sealing configuration the outlet aperture may be displaced from the outlet bore. In the second sealing configuration the outlet aperture may be rotationally displaced from the outlet bore, e.g. about the axis of axial movement. In the second sealing configuration the outlet aperture may be translationally displaced from the outlet bore, e.g. along the axis of axial movement.

In the second sealing configuration the flow path through the body may be directed around the inner body.

The inner body may comprise a flow directing means around which fluid can flow in the second sealing configuration. The flow directing means may be adapted to optimise fluid flow through the flow path in the second sealing configuration. The flow directing means may be adapted to optimise fluid flow around the inner body in the second sealing position. The flow directing means may be displaced from the inlet bore in the first sealing configuration. The flow directing means may be rotationally displaced from the inlet bore in the first sealing configuration, e.g. about the axis of axial movement. The flow directing means may be translationally displaced from the inlet bore in the first sealing configuration, e.g. along the axis of axial movement. The flow directing means may align with the inlet bore in the second sealing configuration. The flow directing means may be provided between the inlet aperture and the base of the inner body. The flow directing means may comprise a window and a channel. The window may be in fluid communication with the channel. The channel may extend through the base of the inner body. The channel may be isolated from, where present, the mechanism.

In use, in the second sealing configuration, fluid may flow through the inlet bore in the inlet connector, then through the flow directing means (e.g. isolated from the mechanism), then through the outlet bore in the outlet connector.

In alternative embodiments the inner body may comprise two or more secondary apertures. The secondary apertures may be provided at respective ends of a bypass path. The bypass path may extend through the inner body but may be isolated from, where present, the mechanism. The secondary apertures may comprise a secondary inlet aperture and a secondary outlet aperture.

In such alternative embodiments, in use, in the first sealing configuration fluid may flow through the inlet bore in the inlet connector, then through the inlet aperture and the mechanism, then through the outlet aperture, then through the outlet bore in the outlet connector.

In such alternative embodiments, in use, in the second sealing configuration fluid may flow through the inlet bore in the inlet connector, then through the secondary inlet aperture, then through the secondary outlet aperture, then through the outlet bore in the outlet connector.

The sealing means may be provided between the outer body and the inner body. The sealing means may be provided on the inner body and/or on the outer body. The sealing means may be provided on an outer surface of the inner body and/or on an inner surface of the outer body (e.g. a surface of the outer body cavity). The sealing means may comprise one or more sealing members. There may be one or more first sealing members, one or more second sealing members and/or one or more third sealing members. The or each sealing member may be a sealing ring.

The or each first sealing member may be arranged substantially parallel or substantially perpendicular to the longitudinal axis of the inner body. The or each first sealing member may be arranged substantially parallel or substantially perpendicular to the axis of axial movement. The or each first sealing member may be provided between the inlet bore and the annular lip.

In the first sealing configuration the or each first sealing member may be adapted to prevent fluid from the inlet bore escaping around the inner body, out of the body cavity opening. In the first sealing configuration the first sealing member may be positioned between the annular rim and the inlet aperture.

In the second sealing configuration the or each first sealing member may be adapted to prevent fluid from the inlet bore escaping around the inner body, out of the body cavity opening. In the second sealing configuration the or each first sealing member may be positioned between the annular rim and the inlet aperture, towards the inlet aperture.

The or each second sealing member may be arranged substantially parallel or substantially perpendicular to the longitudinal axis of the inner body. The or each second sealing member may be arranged substantially parallel or substantially perpendicular to the axis of axial movement. The or each second sealing member may be provided between the inlet aperture and the outlet aperture. The or each second sealing member may be provided between the inlet aperture and the flow directing means.

In the first sealing configuration the or each second sealing member may be adapted to prevent fluid from escaping from the inlet bore to the outlet bore around the inner body, instead of following the intended route through the mechanism. In the first sealing configuration the or each second sealing member may be positioned between the inlet bore and the outlet bore.

In the second sealing configuration the or each second sealing member may be adapted to prevent fluid from the inlet aperture escaping around the inner body, out of the body cavity opening. In the second sealing configuration the or each second sealing member may be positioned between the body cavity opening and the inlet bore.

The or each third sealing member may be arranged substantially parallel or substantially perpendicular to the longitudinal axis of the inner body. The or each third sealing member may be arranged substantially parallel or substantially perpendicular to the axis of axial movement. The or each third sealing member may be provided between the outlet aperture and the inner body base. The or each third sealing member may be provided towards or at the inner body base.

In the first sealing configuration, the or each third sealing member may be adapted to prevent fluid from entering between the inner body base and the outer body base. In the first sealing configuration, the or each third sealing member may be arranged between the outlet bore and the outer body base.

In the second sealing configuration, the or each third sealing member may be adapted to prevent fluid between the inner body base and the outer body base from escaping around the inner body, out of the body cavity opening. In the second sealing configuration, the or each third sealing member may be arranged between the inlet bore and the outlet bore.

A person skilled in the art will appreciate that any other suitable sealing means, in any suitable configuration, may be used.

In the first sealing configuration the or each projection may be arranged in the or each respective primary, outer, portion. In the first sealing configuration the or each projection may be arranged towards or at a closed end of the or each respective primary, outer, portion. In the second sealing configuration the or each projection may be arranged in the or each respective tertiary, outer, portion. In the second sealing configuration the or each projection may be arranged towards or at a closed end of the or each respective tertiary, outer, portion. When the plumbing fitting is arranged between the first sealing configuration and the second sealing configuration, the or each projection may be arranged in the or each respective secondary, central, portion.

In the first sealing configuration, the sealing means may engage with one or more sealing surfaces of the inner body and/or the outer body. In the second sealing configuration, the sealing means may engage with one or more sealing surfaces of the inner body and/or the outer body.

When the plumbing fitting is arranged between the first sealing configuration and the second sealing configuration, the sealing means may be disengaged from one or more sealing surfaces of the inner body and/or outer body. In this arrangement, the inner body can be moved relative to the outer body with ease, since the resistive force provided by the sealing means is reduced (relative to when the sealing surfaces are engaged).

The plumbing fitting may comprise a lock configured to releasably lock the inner body to the outer body in the first sealing configuration. In this way, the lock may prevent the inner body from inadvertently ejecting from the outer body. This could otherwise occur, e.g. due to a pressure surge. The lock may comprise one or more first locking portions adapted to interlock with one or more second locking portions. The or each first locking portion may be provided on the outer body. The or each second locking portion may be provided on the inner body. Any other suitable lock may be used, as will be known to a person skilled in the art. Non-limiting examples of other suitable locks include clips and other suitable fastening means.

The plumbing fitting may comprise the mechanism. The mechanism may be releasably mounted in the inner body. The mechanism may be releasably mounted in the cavity provided in the inner body. The mechanism may be releasably mounted in the inner body by securing means. The securing means may comprise a screw and thread connection, twist connection or push-fit connection. Any other suitable securing means may be used, as will be known to a person skilled in the art. The mechanism may be manually, mechanically and/or electronically releasable from the inner body. Alternatively, the mechanism may form the inner body.

The mechanism may be a valve, filter, measurement device or combination thereof. The mechanism may be selected from an anti-back-flow valve, commissioning valve, control valve, serviceable valve, metering valve, balancing valve, regulating valve, mixing valve, thermostatic valve, safety valve, isolation valve, dosing valve, service valve, filtration device, measuring device and combination thereof. In particular, the mechanism may be a pressure independent control valve (PICV).

The second sealing configuration may be a flushing position, servicing position, maintenance position, bypass position and/or mechanism replacement position.

According to a second aspect of the present invention, there is provided a plumbing system comprising a plurality of pipes connected to one or more plumbing fittings according to the first aspect of the present invention.

Non-limiting examples of plumbing systems include water supply systems (e.g. water supply systems for internal use in domestic or industrial buildings), drain-waste vent systems, sewage systems, septic systems, greywater recovery systems, treatment systems, hydronic systems, domestic heating systems and industrial heating systems.

### Detailed Description

In order that the invention may be more clearly understood, an embodiment thereof will now be described, by way of example only, with reference to the accompanying drawings, in which:
Fig. 1 shows a cross sectional side view of a plumbing fitting according to an embodiment of the present invention, wherein the plumbing fitting is configured in the first sealing configuration;
Fig. 2 shows a cross sectional side view of the plumbing fitting of Fig. 1, wherein the plumbing fitting is configured in the second sealing configuration;
Fig. 3 shows an isometric side view of a receptacle of the plumbing fitting of Fig. 1, showing the first track at the inlet side of the receptacle; and
Fig. 4 shows an isometric side view of the receptacle of the plumbing fitting of Fig 1, showing the second track at the outlet side of the receptacle.

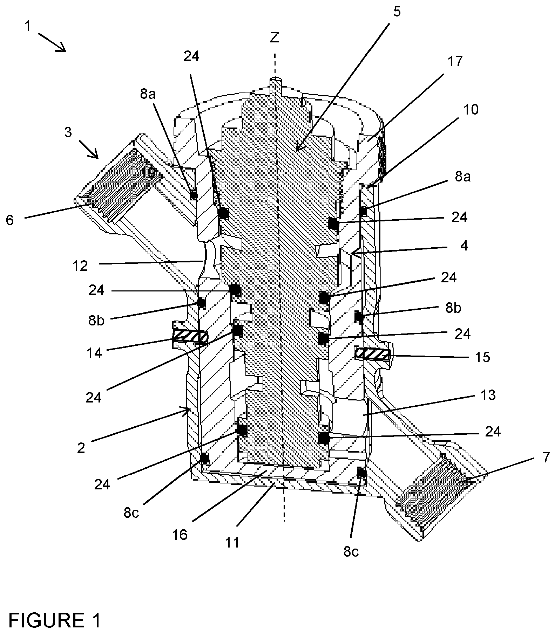

With reference to Figs. 1 to 4, a plumbing fitting 1 comprises an outer body 2 having a flow path 3 extending therethrough; an inner body in the form of a receptacle 4 disposed in the outer body 2; and a functional mechanism 5 releasably received in the receptacle 4.

A person skilled in the art will appreciate that the mechanism may be any suitable mechanism, as desired or required in order to carry out a particular function. For example, the mechanism may be a valve, filter or measurement device; such as an anti-back-flow valve, commissioning valve, control valve, serviceable valve, metering valve, balancing valve, regulating valve, mixing valve, thermostatic valve, safety valve, isolation valve, dosing valve, service valve, filtration device or measuring device. In this particular embodiment, the mechanism 5 is that of a pressure independent control valve (PICV).

The outer body 2 has a connector inlet 6 and a connector outlet 7 disposed on opposing, outer sides thereof, arranged co-axially, with their axes at around 45 degrees to the longitudinal axis of the outer body 2, the receptacle 4 and the mechanism 5. The connectors 6, 7 are adapted to connect to pipes of a plumbing system (not shown). The flow path 3 extends through and between the connectors 6, 7, via an inlet bore in the inlet connector 6 to an outlet bore in the outlet connector 7. The outer body 2 has at one end an opening to a cavity, the opening defined by an annular lip 10; and at an opposite end a closed base 11. The outer body cavity is adapted to receive the receptacle 4, to thereby provide a secure fit between the outer body 2 and the receptacle 4.

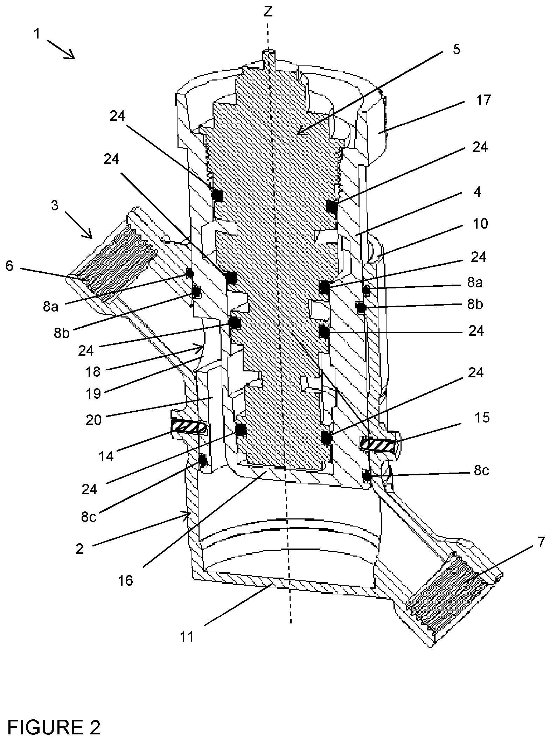

The outer body 2 comprises a first projection 14 and a second projection 15 (as shown in Figs. 1 and 2). The first projection 14 and the second projection 15 are substantially identical in form and are provided coaxially in opposing circumferential sides of the outer body 2, with their axes substantially perpendicular to the longitudinal axis of the outer body 2, the receptacle 4 and the mechanism 5.

Each projection 14, 15 is a grub screw with a ball bearing tip, the screw having a thread that engages with a corresponding thread on the outer body 2, such that the projection can be extended into, and retracted from, the outer body cavity. A person skilled in the art will appreciate that other types of projections may be used.

The receptacle 4 has an inlet aperture 12 and an outlet aperture 13 disposed on opposing, outer sides thereof. The inner diameters of the inlet aperture 12 and the outlet aperture 13 are substantially the same as the inner diameters of the inlet bore and the outlet bore. However, a person skilled in the art will appreciate that the diameters may vary and is capable of selecting suitable diameters. The receptacle 4 has a substantially cylindrical form, with at one end an opening to a cavity for releasably receiving the mechanism 5 and at an opposite end a closed base 16. An annular rim 17 defines the receptacle cavity opening, and is provided with a textured surface to facilitate functioning of the annular rim 17 as gripping means.

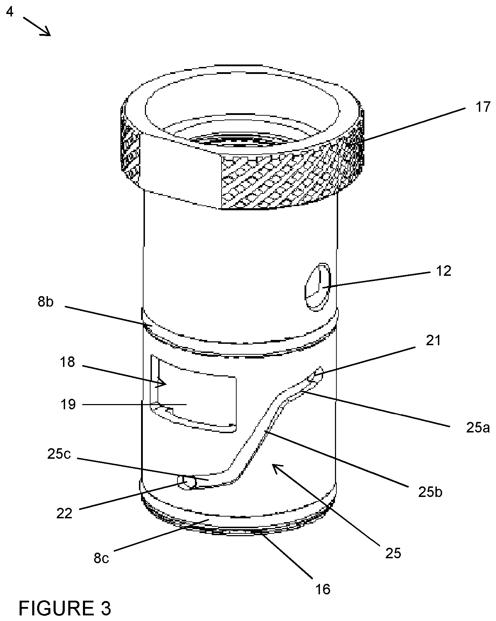

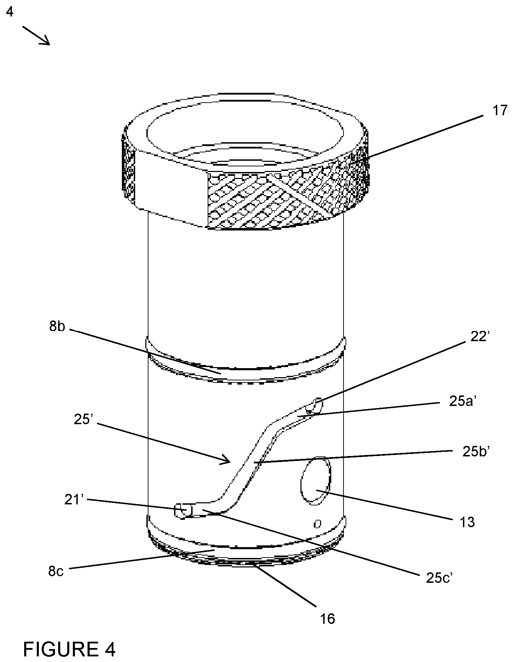

The receptacle 4 comprises a first track 25 (as shown in Fig. 3) and a second track 25' (as shown in Fig. 4) recessed into the outer circumferential surface thereof. The first track 25 and the second track 25' are substantially identical in form and are provided coaxially at opposing circumferential surface sides of the receptacle 4. Each of the first track 25 and the second track 25' traces an arc of the circumferential surface of the receptacle 4, the arc having a central angle of approximately 90 degrees. A person skilled in the art will appreciate that the central angle may be more or less than 90 degrees, as applicable. The first track 25 and the second track 25' are superimposable on each other by rotation about the longitudinal axis of the receptacle 4.

Each track 25, 25' is provided with a substantially straight primary, outer, portion, 25a, 25a', a substantially straight secondary, central, portion, 25b, 25b', and a substantially straight tertiary, outer portion, 25c, 25c'. A person skilled in the art will appreciate that any one or more of the portions may be curved or substantially straight, as desired or required for a given application. In each track 25, 25' one end of the primary, outer, portion, 25a, 25a', is closed and the opposite end of the primary, outer, portion, 25a, 25a', continuously adjoins one end of the secondary, central, portion, 25b, 25b'; the opposite end of the secondary, central, portion, 25b, 25b', continuously adjoins one end of the tertiary, outer, portion, 25c, 25c'; and the opposite end of the tertiary, outer, portion, 25c, 25c', is closed. At the closed end of each of the primary, outer, portion, 25a, 25a', and the tertiary, outer, portion, 25c, 25c', is provided a notch 21, 21', 22, 22', for receiving a respective grub screw 14, 15. Each notch extends deeper into the receptacle 4 than the remainder of the track 25, 25'.

The angle of inclination of each secondary, central, portion, 25b, 25b', is greater than the angle of inclination of each primary, outer, portion, 25a, 25a', and of each tertiary, outer, portion, 25c, 25c', respectively, the angle of inclination being relative to the axis of rotation of the receptacle 4, which is also its axis of axial movement (i.e. defined by the axial translation of the receptacle 4 relative to the outer body 2 on moving between the first sealing configuration, and the second sealing configuration, shown as axis Z in Figs. 1 and 2). Each track 25, 25' is roughly shaped as a sigmoid curve, where the respective ends of the curve are inclined (i.e. they do not plateau).

The change in inclination of each track 25, 25' on moving between each primary, outer, portion 25a, 25a', and each secondary, central, portion 25b, 25b', and each tertiary, outer, portion 25c, 25c', is gradual. However, a person skilled in the art will appreciate that one or more change inclination may be abrupt and one or more change inclination may be gradual.

Each grub screw 14, 15 projects into a respective track 25, 25'. Twisting the receptacle 4 relative to the outer body 2 causes each grub screw 14, 15 to follow its respective track 25, 25', to thereby rotationally (about axis Z) and translationally (along axis Z) move the receptacle 4 relative to the outer body 2. The rotational movement is caused by rotation of the receptacle 4 about axis Z relative to the outer body 2. The translational movement is caused by the interaction between the grub screws 14, 15 and the tracks 25, 25', in which the receptacle 4 is required to translate along axis Z to allow the grub screws 14, 15 to follow the inclined tracks 25, 25'.

As shown in Figs. 1 to 4, the receptacle 4 has sealing means adapted to prevent inadvertent leakage of fluid between the outer body 2 and the receptacle 4. The sealing means comprises an upper sealing member 8a, a middle sealing member 8b, and a lower sealing member 8c. Each of the sealing members 8a, 8b, 8c is in the form of a sealing ring.

The upper ring 8a is provided within a recess on an inner circumferential surface of the outer body, towards the outer body cavity opening, between the inlet bore and the annular lip 10. The upper ring 8a is arranged substantially perpendicular to the longitudinal axis of the receptacle 4.

The middle ring 8b is provided within a recess on an outer circumferential surface of the receptacle 4, about half-way between the annular rim 17 and the receptacle base 16, below the inlet aperture and above the flow directing means 18. The middle ring 8b is arranged substantially perpendicular to the longitudinal axis of the receptacle 4.

The lower ring 8c is provided within a recess on an outer circumferential surface of the receptacle 4, adjacent to the receptacle base 16, and is substantially perpendicular to the longitudinal axis of the receptacle 4.

As shown in Figs. 2 and 3, flow directing means 18 is provided on the outer circumferential surface of the receptacle 4. The flow directing means 18 is adapted to optimise fluid flow through the flow path 3 in the second sealing configuration. The flow directing means 18 comprises a rectangular window section 19 leading to a channel 20, which channel 20 extends parallel to the longitudinal axis of the receptacle 4, towards and through the receptacle base 16.

The receptacle 4 can be moved between a first sealing configuration (as shown in Fig. 1) in which the flow path 3 extends through the receptacle 4 and the mechanism 5, and a second sealing configuration (as shown in Fig. 2) in which the flow path 3 bypasses the mechanism 5 whereby in the second sealing configuration, the mechanism 5 can be released from the receptacle 4 whilst a fluid flows through the flow path 3.

In the first sealing configuration, the grub screw 14 is arranged in the primary, outer, portion, 25a (adjacent to the notch 21), and the grub screw 15 is arranged in the primary, outer, portion, 25a' (adjacent to the notch 21'). Here, the annular lip 10 is flush with the annular rim 17, the inlet bore aligns with the receptacle inlet 12, and the outlet bore aligns with the receptacle outlet 13.

**In** the second sealing configuration, the grub screw 14 is arranged in the tertiary, outer, portion, 25c (adjacent to the notch 22), and the grub screw 15 is arranged in the tertiary, outer, portion, 25c' (adjacent to the notch 22'). Here, the annular rim 17 is spaced from the annular lip 10; the receptacle inlet 12 is rotationally (about axis Z) and axially (along axis Z) displaced from the inlet bore, and is in alignment with the window section 19; and the receptacle outlet 13 is rotationally (about axis Z) and axially (along axis Z) displaced from the outlet bore.

**In** the first sealing configuration, the upper ring 8a engages with a sealing surface on the outer circumferential surface of the receptacle 4 and is positioned between the annular rim 17 and the receptacle inlet 12. Here, the upper ring 8a is adapted to prevent fluid from the inlet bore escaping around the receptacle 4, out of the body cavity opening.

In the second sealing configuration, the upper ring 8a engages with a sealing surface on the outer circumferential surface of the receptacle 4 and is positioned between the annular rim 17 and the receptacle inlet 12, but closer towards the receptacle inlet 12 than in the first sealing configuration. Here, the upper ring 8a again is adapted to prevent fluid from the inlet bore escaping around the receptacle 4, out of the body cavity opening.

In the first sealing configuration, the middle ring 8b engages with a sealing surface on the inner circumferential surface of the outer body 2 and is positioned between the inlet bore and the outlet bore. Here, the middle ring 8b is adapted to prevent fluid from escaping from the inlet bore to the outlet bore around the receptacle 4, instead of following the intended route through the mechanism 5.

In the second sealing configuration, the middle ring 8b engages with a sealing surface on the inner circumferential surface of the outer body 2 and is positioned between the inlet bore 6 and the annular lip 10 at the outer body cavity opening. Here, the middle ring 8b is adapted to prevent fluid from the inlet aperture 12 escaping around the receptacle 4, out of the body cavity opening.

In the first sealing configuration, the lower ring 8c engages with a sealing surface on the inner circumferential surface of the outer body 2 and is positioned adj acent to the outer body base 11, i.e. between the inlet bore and the outer body base 11. Here, the lower ring 8c is adapted to prevent fluid from entering between the outer body base 11 and the receptacle base 16.

In the second sealing configuration, the lower ring 8c engages with a sealing surface on the inner circumferential surface of the outer body 2 and is positioned between the inlet bore and the outlet bore. Here, the lower ring 8c is adapted to prevent fluid between the inner body base 16 and the outer body 11 base (which fluid is bypassing the receptacle 4 and the mechanism 5) escaping around the receptacle 4, out of the body cavity opening.

A person skilled in the art will appreciate that any suitable number of sealing rings, in any suitable configuration, may be used, as desired or required for a given application.

When the receptacle 4 is arranged between the first sealing configuration and the second sealing configuration, the screws 14, 15 are arranged in the secondary, central, portion 25b, 25b'. Here, the rings 8a, 8b and 8c are disengaged from the respective sealing surfaces. In this way, it is easy to move the receptacle 4 relative to the outer body 2 when the plumbing fitting is arranged between the first sealing configuration and the second sealing configuration, since the resistive force of the rings 8a, 8b, 8c is reduced relative to when the rings 8a, 8b, 8c are engaged. A person skilled in the art will appreciate that one or more of the rings 8a, 8b, 8c may be partially or fully disengaged to provide this advantageous effect.

The plumbing fitting 1 comprises a screw and thread arrangement (not shown) adapted to releasably secure the mechanism 5 to the receptacle 4. In this way, the mechanism 5 can be released from the receptacle 4 in the second sealing configuration. When the mechanism 5 is secured within the receptacle 4, the plumbing fitting 1 can be moved from the second sealing configuration to the first sealing configuration.

As shown in Figs. 1 and 2, the receptacle 4 comprises a number of internal sealing surfaces arranged to receive sealing rings 24 of the mechanism 5. The mechanism sealing rings 24 are operable to prevent leakage of fluid between the mechanism 5 and the receptacle cavity.

In some embodiments the plumbing fitting 1 is provided with a twist lock (not shown) comprising first lock portions provided on the outer body 2; and corresponding second lock portions provided on the receptacle 4. The second lock portions can be adapted to interlock with the first lock portions. Thus, in the first sealing configuration, upon twisting the receptacle 4 relative to the outer body 2, such that the first lock portions can interlock with the second lock portions, the receptacle 4 can be secured to the outer body 2. By the reverse process, the twist lock can be released by untwisting the receptacle 4 from the outer body 2, such that the first lock portions can be released from the second lock portions. Other twist lock mechanisms may be used, as will be appreciated by a person skilled in the art.

To move the plumbing fitting 1 between the first sealing configuration and the second sealing configuration, the receptacle 4 is twisted by a quarter-turn (i.e. by approximately 90 degrees) relative to the outer body 2. This can be conveniently performed by hand, by gripping the textured surface of the annular rim 17 and twisting the receptacle 4 relative to the outer body 2. Movement of the receptacle 4 relative to the outer body 2 is confined by movement of the grub screws 14, 15 within the tracks 25, 25', which have respective closed end points. As such it is straightforward for a user to determine whether or not the plumbing fitting 1 is correctly configured in the first sealing configuration, or the second sealing configuration.

On moving the plumbing fitting 1 between the first sealing configuration, and the second sealing configuration, the grub screw 14 moves within the track 25 (i.e. from 25a towards 25c or vice-versa) and the grub screw 15 moves within track 25' (i.e. from 25a' towards 25c' or vice-versa), causing the receptacle 4 to translate axially (along axis Z), and rotate (about axis Z), relative to the outer body 2. The angle of inclination of the primary, outer, portion 25a, 25a' and the tertiary, outer portion 25c, 25c', which is less than that of the secondary, central, portion 25b, 25b', provides a mechanical advantage which helps to overcome the resistive force of the sealing rings 8, 9, as they are brought into and out of engagement with the sealing surfaces of the inner circumferential surface of the outer body. That is to say, the primary, outer, portion 25a, 25a' and the tertiary, outer portion 25c, 25c', are so shaped as to aid user in overcoming the resistive force provided by the sealing rings 8, 9, such that plumbing fitting 1 can be easily moved between the first sealing configuration, and the second sealing configuration. This is especially useful where the plumbing fitting 1 has not been used for an extended period of time, which can result in it being particularly difficult to move the receptacle 4 relative to the outer body 2. The angle of inclination of the secondary, central, portion 25b, 25b' also provides a mechanical advantage, albeit to a lesser extent than the portions 25a, 25a', 25c, 25c', but primarily functions to permit accelerated movement (through a greater axial distance) of the receptacle 4 relative to the outer body 2, once the receptacle 2 is set in motion and the sealing rings 8a, 8b, 8c are no longer in engagement with their corresponding internal sealing surfaces. That is to say, to translate the receptacle 4 along the Z axis relative to the outer body 2, less rotational movement of the receptacle 4 about the Z axis relative to the outer body 2 is required to axially move the receptacle 4 relative to the outer body 2 by a set distance, when the projection 14, 15 is moved within the steeper inclination of the secondary, central, portion 25b, 25b', relative to when the projection 14, 15 is moved within the less inclined primary, outer, portion 25a, 25a' and tertiary, outer portion 25c, 25c'.

In this way, by virtue of the primary, outer, portion 25a, 25a' and the tertiary, outer portion 25c, 25c' it is easy to move the plumbing fitting 1 between the different configurations against the resistive force of the sealing rings 8, 9; and by virtue of the secondary, central, portion 25b, 25b', the receptacle 4 can be axially translated by the required distance, in a time-efficient manner (more twisting is required to move between the different configurations when the angle of inclination is low).

The plumbing fitting 1 can be releasably secured in the first sealing configuration, or in the second sealing configuration by screwing each grub screw 14, 15 into the respective notch 21, 21', 22, 22' (as applicable).

In the first sealing configuration, as shown in Fig. 1, the flow directing means 18 is translationally and rotationally displaced from the inlet bore 6. That is to say, in the first sealing configuration, the flow directing means 18 is arranged between the inlet bore 6 and the outer body base 11, and is rotated by approximately 90 degrees about the axis Z, away from the inlet bore 6.

In the second sealing configuration, the window section 19 is in alignment with the inlet bore 6, such that fluid can be directed into the plumbing fitting 1 at the inlet 6, through the channel via the rectangular window section 19, under the receptacle 4, and out of the plumbing fitting 1 at the outlet 7.

In use, in the first sealing configuration, fluid can flow via the flow path 3, into the inlet bore in the inlet connector 6, then through the inlet aperture 12 and the mechanism 5, then through the outlet aperture 13, then through the outlet bore in the outlet connector 7. In this way, the mechanism 5 can perform its predetermined function (e.g. in the case of a pressure independent control valve (PICV) mechanism, to control and regulate flow, and to control the pressure differential across the PICV).

In use, in the second sealing configuration, fluid can flow via the flow path 3 through the inlet bore in the inlet connector 6, then through the window section 19 and channel 20, between the outer body base 11 and the receptacle base 16, then through the outlet bore in the outlet connector 7. Hence, fluid cannot enter the inlet 12 or the outlet 13, which are rotationally (about the Z axis) and translationally (along the Z axis) displaced from the inlet and outlet bores, and are sealed off by the sealing rings 8, 9. In this way, in the second sealing configuration the mechanism 5 can be accessed for maintenance or repair, as desired or required, whilst fluid flows through the flow path 3, without isolating/disconnecting the plumbing fitting 1 from the system to which it is attached.

Most regulating valves rely on the user removing the working components prior to flushing/cleaning the system. This involves draining the system in order to remove the sensitive components. If these components are not removed then flushing through them can clog the small orifices with debris or damage the workings. The system described allows the user to withdraw the regulating mechanism to a flushing position which is isolated from the flow. This protects the regulating mechanism from damage during flushing. The system does not need to be drained therefore simplifying and speeding up the process.

The above embodiment is described by way of example only. Many variations are possible without departing from the scope of the invention as defined in the appended claims. For example, whilst in the above embodiment the inner body is provided as a receptacle with a mechanism therein, the inner body may be the mechanism itself.

## Claims

1. A plumbing fitting (1) comprising: an outer body (2) having a flow path (3) extending therethrough; an inner body (4) disposed in, and axially movable along an axis relative to, the outer body (2); sealing means (8) configured to prevent leakage of fluid from the plumbing fitting (1); the outer body (2) or the inner body (4) further comprising a track (25), the other of the outer body (2) or the inner body (4) further comprising a projection (14,15), the projection (14,15) being movable in the track (25); wherein the track (25) has at least a primary, outer, portion (25a), a secondary, central, portion (25b) and a tertiary, outer, portion (25c), and the angle of inclination of the secondary, central, portion (25b) is greater than the angle of inclination of the primary, outer, portion (25a) and of the tertiary, outer, portion (25c), respectively, the angle of inclination being relative to the axis of axial movement; and wherein the plumbing fitting (1) is movable between a first sealing configuration in which the projection (14,15) is arranged in the primary, outer, portion (25a), and a second sealing configuration in which the projection (14,15) is arranged in the tertiary, outer, portion (25c); wherein the inner body (4) comprises an inlet aperture (12) and an outlet aperture (13) **characterised in that** the or each track is substantially shaped as a sigmoid curve, where the respective ends of the curve are inclined with respect to said axis of axial movement.

2. A plumbing fitting (1) as claimed in claim 1 wherein the outer body (2) or the inner body (4) comprises more than one track (25,25'), and the other of the outer body (2) or the inner body (4) comprises more than one projection (14,15) and optionally; wherein each projection (14,15) corresponds with a respective track (25,25').

3. A plumbing fitting (1) as claimed in any preceding claim wherein the inner body (4) comprises the or each track (25), and the outer body (2) comprises the or each projection (14,15); and optionally wherein one or more of the primary portion (25a), secondary portion (25b) and tertiary portion (25c) are substantially straight; and/or wherein the or each track (25) comprises one or more notches (21,21',22,22') into which a projection (14,15) is releasably engageable to thereby secure in position the inner body (4) relative to the outer body (2).

4. A plumbing fitting (1) as claimed in any preceding claim wherein the change in inclination of the or each track (25) on moving between the primary, outer, portion (25a), and/or the secondary, central, portion (25b), and/or the tertiary, outer, portion (25c) is gradual.

5. A plumbing fitting (1) as claimed in any preceding claim wherein the change in inclination of the or each track (25) on moving between the primary, outer, portion (25a), and/or the secondary, central, portion (25b), and/or the tertiary, outer, portion (25c) is abrupt.

6. A plumbing fitting (1) as claimed in any preceding claim wherein when the plumbing fitting (1) is arranged between the first sealing configuration and the second sealing configuration, the or each projection (14,15) is arranged in the or each respective secondary, central, portion (25b).

7. A plumbing fitting (1) as claimed in any preceding claim wherein in the first and/or second sealing configuration, the sealing means (8) engage with one or more sealing surfaces of the inner body (4) and/or the outer body (2); and optionally wherein when the plumbing fitting (1) is arranged between the first sealing configuration and the second sealing configuration, the sealing means (8) is disengaged from one or more sealing surfaces of the inner body (4) and/or the outer body (2).

8. A plumbing fitting (1) as claimed in any preceding claim wherein the outer body (2) comprises a cavity in which the inner body (4) is disposed, a closed base (11), an inlet connector (6) having an inlet bore, and an outlet connector (7) having an outlet bore; and optionally wherein the inner body (4) comprises a closed base.

9. A plumbing fitting (1) as claimed in any preceding claim wherein the inner body (4) is adapted to releasably receive a mechanism (5).

10. A plumbing fitting (1) as claimed in any of claims 1 to 8 wherein a mechanism (5) forms the inner body (4).

11. A plumbing fitting (1) as claimed in any preceding claim wherein the sealing means (8) comprises one or more first sealing members (8a), one or more second sealing members (8b) and/or one or more third sealing members (8c).

12. A plumbing fitting (1) as claimed in claim 11 when dependent directly or indirectly on claim 8, wherein in the first sealing configuration and/or the second sealing configuration, the or each first sealing member (8a) is adapted to prevent fluid from the inlet bore escaping around the inner body (4), out of the body cavity opening.

13. A plumbing fitting (1) as claimed in claim 11 or 12 when dependent directly or indirectly on claim 8, wherein in the first sealing configuration, the or each second sealing member (8b) is adapted to prevent fluid from escaping from the inlet bore to the outlet bore around the inner body (4).

14. A plumbing fitting (1) as claimed in any of claims 11 to 13 when dependent directly or indirectly on claim 8, wherein in the second sealing configuration, the or each second sealing member (8b) is adapted to prevent fluid from the inlet aperture (12) escaping around the inner body (4), out of the body cavity opening.

15. A plumbing fitting (1) as claimed in claim 9, claim 10, or any of claims 11 to 14 when dependent on claim 9 or 10 wherein the mechanism (5) is a pressure independent control valve.

## Patentansprüche

1. Leitungsarmatur (1), aufweisend: einen Außenkörper (2) mit einem sich durch diesen hindurch erstreckenden Fluidpfad (3); einen Innenkörper (4), der in dem Außenkörper (2) angeordnet und entlang einer Achse relativ zu diesem axial beweglich ist; Dichtungsmittel (8), die dazu ausgebildet sind, das Austreten von Fluid aus der Leitungsarmatur (1) zu verhindern; der Außenkörper (2) oder der Innenkörper (4) weiterhin aufweisend eine Spur (25), der jeweils andere Außenkörper (2) oder Innenkörper (4) weiterhin aufweisend einen Vorsprung (14, 15), wobei der Vorsprung (14, 15) in der Spur (25) beweglich ist; wobei die Spur (25) mindestens einen primären, äußeren Abschnitt (25a), einen sekundären, mittleren Abschnitt (25b) und einen tertiären, äußeren Abschnitt (25c) aufweist, und der Neigungswinkel des sekundären, mittleren Abschnitts (25b) jeweils größer ist als der Neigungswinkel des primären, äußeren Abschnitts (25a) und des tertiären, äußeren Abschnitts (25c), wobei der Neigungswinkel relativ zur Achse der axialen Bewegung ist; und wobei die Leitungsarmatur (1) beweglich ist zwischen einer ersten dichtenden Ausrichtung, in welcher der Vorsprung (14, 15) in dem primären, äußeren Teil (25a) angeordnet ist, und einer zweiten dichtenden Ausrichtung, in welcher der Vorsprung (14, 15) in dem tertiären, äußeren Teil (25c) angeordnet ist; wobei der Innenkörper (4) eine Einlassöffnung (12) und eine Auslassöffnung (13) aufweist, **dadurch gekennzeichnet, dass** die oder jede Spur im Wesentlichen als eine sigmoidale Kurve geformt ist, wobei die jeweiligen Enden der Kurve in Bezug auf die Achse der axialen Bewegung geneigt sind.

2. Leitungsarmatur (1) nach Anspruch 1, wobei der Außenkörper (2) oder der Innenkörper (4) mehr als eine Spur (25, 25') aufweist und der jeweils andere Außenkörper (2) oder Innenkörper (4) mehr als einen Vorsprung (14, 15) aufweist, wobei jeder Vorsprung (14, 15) mit einer entsprechenden Spur (25, 25') korrespondiert.

3. Leitungsarmatur (1) nach einem der vorhergehenden Ansprüche, wobei der Innenkörper (4) die oder jede Spur (25) aufweist, und der Außenkörper (2) den oder jeden Vorsprung (14, 15) aufweist; und wobei optional einer oder mehrere der primären Abschnitte (25a), sekundären Abschnitte (25b) und tertiären Abschnitte (25c) im Wesentlichen gerade sind; und/oder wobei die oder jede Spur (25) eine oder mehrere Ausbuchtungen (21, 21', 22, 22') aufweist, in die ein Vorsprung (14, 15) lösbar eingreifen kann, um dadurch den Innenkörper (4) relativ zu dem Außenkörper (2) in seiner Position zu sichern.

4. Leitungsarmatur (1) nach einem der vorhergehenden Ansprüche, wobei die Änderung der Neigung der oder jeder Spur (25) bei der Bewegung zwischen dem primären, äußeren Teil (25a) und/oder dem sekundären, mittleren Teil (25b) und/oder dem tertiären, äußeren Teil (25c) fortschreitend erfolgt.

5. Leitungsarmatur (1) nach einem der vorhergehenden Ansprüche, wobei die Änderung der Neigung der oder jeder Spur (25) bei der Bewegung zwischen dem primären, äußeren Teil (25a) und/oder dem sekundären, mittleren Teil (25b) und/oder dem tertiären, äußeren Teil (25c) abrupt ist.

6. Leitungsarmatur (1) nach einem der vorhergehenden Ansprüche, wobei der oder jeder Vorsprung (14, 15) in dem oder jedem jeweiligen sekundären, zentralen Abschnitt (25b) angeordnet ist, wenn die Leitungsarmatur (1) zwischen der ersten dichtenden Ausrichtung und der zweiten dichtenden Ausrichtung angeordnet ist.

7. Leitungsarmatur (1) nach einem der vorhergehenden Ansprüche, wobei in der ersten und/oder zweiten dichtenden Ausrichtung die Dichtungsmittel (8) mit einer oder mehreren Dichtungsflächen des Innenkörpers (4) und/oder des Außenkörpers (2) in Eingriff stehen; und wobei optional die Dichtungsmittel (8) von einer oder mehreren Dichtungsflächen des Innenkörpers (4) und/oder des Außenkörpers (2) gelöst sind, wenn die Leitungsarmatur (1) zwischen der ersten dichtenden Ausrichtung und der zweiten dichtenden Ausrichtung angeordnet ist.

8. Leitungsarmatur (1) nach einem der vorhergehenden Ansprüche, wobei der Außenkörper (2) einen Hohlraum, in dem der Innenkörper (4) angeordnet ist, eine geschlossene Basis (11), einen Einlassverbinder (6) mit einer Einlassbohrung und einen Auslassverbinder (7) mit einer Auslassbohrung aufweist; und wobei der Innenkörper (4) optional eine geschlossene Basis aufweist.

9. Leitungsarmatur (1) nach einem der vorhergehenden Ansprüche, wobei der Innenkörper (4) dazu angepasst ist, einen Mechanismus (5) lösbar aufzunehmen.

10. Leitungsarmatur (1) nach einem der Ansprüche 1 bis 8, wobei ein Mechanismus (5) den Innenkörper (4) bildet.

11. Leitungsarmatur (1) nach einem der vorhergehenden Ansprüche, wobei die Dichtungsmittel (8) ein oder mehrere erste Dichtungselemente (8a), ein oder mehrere zweite Dichtungselemente (8b) und/oder ein oder mehrere dritte Dichtungselemente (8c) aufweisen.

12. Leitungsarmatur (1) nach Anspruch 11, wenn direkt oder indirekt von Anspruch 8 abhängig, wobei in der ersten dichtenden Ausrichtung und/oder der zweiten dichtenden Ausrichtung das oder jedes erste Dichtungselement (8a) dazu angepasst ist, zu verhindern, dass Fluid aus der Einlassbohrung um den Innenkörper (4) herum aus der Körperhohlraumöffnung entweicht.

13. Leitungsarmatur (1) nach Anspruch 11 oder 12, wenn direkt oder indirekt von Anspruch 8 abhängig, wobei in der ersten dichtenden Ausrichtung das oder jedes der zweiten Dichtungselemente (8b) dazu angepasst ist, zu verhindern, dass Fluid von der Einlassbohrung zur Auslassbohrung um den Innenkörper (4) herum entweicht.

14. Leitungsarmatur (1) nach einem der Ansprüche 11 bis 13, wenn direkt oder indirekt von Anspruch 8 abhängig, wobei in der zweiten dichtenden Ausrichtung das oder jedes der zweiten Dichtungselemente (8b) dazu angepasst ist, zu verhindern, dass Fluid aus der Einlassöffnung (12) um den Innenkörper (4) herum aus der Körperhohlraumöffnung austritt.

15. Leitungsarmatur (1) nach Anspruch 9, Anspruch 10 oder einem der Ansprüche 11 bis 14 wenn abhängig von Anspruch 9 oder 10, wobei der Mechanismus (5) ein druckunabhängiges Steuerventil ist.

## Revendications

1. Un raccord (1) de plomberie comprenant : un corps (2) extérieur ayant un chemin (3) d'écoulement s'y étendant ; un corps (4) intérieur disposé dans le corps (2) extérieur et mobile axialement par rapport à celui-ci suivant un axe ; un moyen (8) d'étanchéité configuré pour empêcher une fuite de fluide du raccord (1) de plomberie ; le corps (2) extérieur ou le corps (4) intérieur comprenant en outre une piste (25), l'autre du corps (2) extérieur ou du corps (4) intérieur comprenant en outre une saillie (14, 15), la saille (14, 15) étant mobile dans la piste (25) ; dans lequel la piste (25) a au moins une partie (25a) primaire extérieure, une partie (25b) secondaire centrale et une partie (25c) tertiaire extérieure, et l'angle d'inclinaison de la partie (25b) secondaire centrale est plus grand que l'angle d'inclinaison de la partie (25a) primaire extérieure et de la partie (25c) tertiaire extérieure respectivement, l'angle d'inclinaison étant relatif à l'axe du mouvement axial ; et dans lequel le raccord (1) de plomberie est mobile entre une première configuration d'étanchéité, dans laquelle la saillie (14, 15) est disposée dans la partie (25a) primaire extérieure, et une deuxième configuration d'étanchéité, dans laquelle la saillie (14, 15) est disposée dans la partie (25c) tertiaire extérieure ; dans lequel le corps (4) intérieur comprend une ouverture (12) d'entrée et une ouverture (13) de sortie,
**caractérisé en ce que** la ou chaque piste est conformée sensiblement sous la forme d'une courbe sigmoïde, où les extrémités respectives de la courbe sont inclinées par rapport audit axe de déplacement axial.

2. Un raccord (1) de plomberie tel que revendiqué à la revendication 1, dans lequel le corps (2) extérieur ou le corps (4) intérieur comprend plus qu'une seule piste (25, 25'), et l'autre du corps (2) extérieur ou du corps (4) intérieur comprend plus qu'une seule saillie (14, 15) ; et dans lequel éventuellement chaque saillie (14, 15) correspond à une piste (25, 25') respective.

3. Un raccord (1) de plomberie tel que revendiqué à n'importe quelle revendication précédente, dans lequel le corps (4) intérieur comprend la ou chaque piste (25), et le corps (2) extérieur comprend la ou chaque saillie (14, 15) ; et dans lequel éventuellement une ou plusieurs de la partie (25a) primaire, de la partie (25b) secondaire et de la partie (25c) tertiaire sont sensiblement droites ; et/ou dans lequel la ou chaque piste (25) comprend une ou plusieurs encoches (21, 21', 22, 22'), dans laquelle une saillie (14, 15) peut pénétrer avec possibilité d'en ressortir pour fixer ainsi en position le corps (4) intérieur par rapport au corps (2) extérieur.

4. Un raccord (1) de plomberie tel que revendiqué à n'importe quelle revendication précédente, dans lequel le changement d'inclinaison de la ou chaque piste (25), par déplacement entre la partie (25a) primaire extérieure et/ou la partie (25b) secondaire centrale et/ou la partie (25c) tertiaire extérieure, est graduel.

5. Un raccord (1) de plomberie tel que revendiqué à n'importe quelle revendication précédente, dans lequel le changement d'inclinaison de la ou chaque piste (25), par déplacement entre la partie (25a) primaire extérieure et/ou la partie (25b) secondaire centrale et/ou la partie (25c) tertiaire extérieure, est abrupte.

6. Un raccord (1) de plomberie tel que revendiqué à n'importe quelle revendication précédente, dans lequel, lorsque le raccord (1) de plomberie est disposé entre la première configuration d'étanchéité et la deuxième configuration d'étanchéité, la ou chaque saillie (14, 15) est disposée dans la ou chaque partie (25b) secondaire centrale respective.

7. Un raccord (1) de plomberie tel que revendiqué à n'importe quelle revendication précédente, dans lequel, dans la première et/ou la deuxième configuration d'étanchéité, les moyens (8) d'étanchéité coopèrent avec une ou plusieurs surfaces d'étanchéité du corps (4) intérieur et/ou du corps (2) extérieur ; et dans lequel éventuellement, lorsque le raccord (1) de plomberie est disposé entre la première configuration d'étanchéité et la deuxième configuration d'étanchéité, le moyen (8) d'étanchéité est dégagé de la une ou des plusieurs surfaces d'étanchéité du corps (4) intérieur et/ou du corps (2) extérieur.

8. Un raccord (1) de plomberie tel que revendiqué à n'importe quelle revendication précédente, dans lequel le corps (2) extérieur comprend une cavité, dans laquelle le corps (4) intérieur est disposé, une base (11) fermée, un connecteur (6) d'entrée ayant un alésage d'entrée et un connecteur (7) de sortie ayant un alésage de sortie ; et dans lequel éventuellement le corps (4) intérieur comprend une base fermée.

9. Un raccord (1) de plomberie tel que revendiqué à n'importe quelle revendication précédente, dans lequel le corps (4) intérieur est propre à recevoir avec possibilité d'en ressortir un mécanisme (5).

10. Un raccord (1) de plomberie tel que revendiqué à l'une quelconque des revendications 1 à 8, dans lequel un mécanisme (5) forme le corps (4) intérieur.

11. Un raccord (1) de plomberie tel que revendiqué à n'importe quelle revendication précédente, dans lequel le moyen (8) d'étanchéité comprend un ou plusieurs premiers éléments (8a) d'étanchéité, un ou plusieurs deuxièmes éléments (8b) d'étanchéité et/ou un ou plusieurs troisièmes éléments (8c) d'étanchéité.

12. Un raccord (1) de plomberie tel que revendiqué à la revendication 11 lorsqu'elle dépend directement ou indirectement de la revendication 8, dans lequel, dans la première configuration d'étanchéité et/ou dans la deuxième configuration d'étanchéité, le ou chaque premier élément (8a) d'étanchéité est propre à empêcher du fluide de s'échapper de l'ouverture de la cavité du corps par l'alésage d'entrée, en passant autour du corps (4) intérieur.

13. Un raccord (1) de plomberie tel que revendiqué à la revendication 11 ou 12 lorsqu'elles dépendent directement ou indirectement de la revendication 8, dans lequel, dans la première configuration d'étanchéité, le ou chaque deuxième élément (8b) d'étanchéité est propre à empêcher du fluide de s'échapper de l'alésage d'entrée à l'alésage de sortie en passant autour du corps (4) intérieur.

14. Un raccord (1) de plomberie tel que revendiqué à l'une quelconque des revendications 11 à 13 lorsqu'elles dépendent directement ou indirectement de la revendication 8, dans lequel, dans la deuxième configuration d'étanchéité, le ou chaque deuxième élément (8b) d'étanchéité est propre à empêcher du fluide de s'échapper de l'ouverture de la cavité du corps par l'ouverture (12) d'entrée, en passant autour du corps (4) intérieur.

15. Un raccord (1) de plomberie tel que revendiqué à la revendication 9, la revendication 10 ou l'une quelconque des revendications 11 à 14 lorsqu'elles dépendent de la revendication 9 ou 10, dans lequel le mécanisme (5) est une vanne de réglage indépendante de la pression.
